# EUROPEAN PATENT SPECIFICATION

(11) **EP 4 450 800 B1**
(45) Date of publication and mention of the grant of the patent: **03.12.2025**
(21) Application number: 23382376.4
(22) Date of filing: 21.04.2023
(51) Int. Cl.: F03D 1/06, F03D 3/06

(54) **METHOD OF MANUFACTURING A WIND TURBINE BLADE**
VERFAHREN ZUR HERSTELLUNG EINER WINDTURBINENSCHAUFEL
PROCÉDÉ DE FABRICATION D'UNE PALE D'ÉOLIENNE

(43) Date of publication of application: 23.10.2024
(73) Proprietor: Siemens Gamesa Renewable Energy Innovation & Technology S.L., 31621 Sarriguren (Navarra) (ES)
(72) Inventor: Yuste Soler, Javier, 31600 Burlada (ES)
(74) Representative: SGRE-Association

(56) References cited:
- EP-A1- 2 377 674
- EP-A1- 2 518 311
- CN-A- 105 402 084
- US-A1- 2011 031 758

## Description

The invention relates to a method of manufacturing a wind turbine blade.

The internal structure of a wind turbine blade can comprise shells (suction and pressure shells), which are light elements in charge of maintaining a proper aerodynamic shape. Furthermore, the internal structure of the wind turbine blade can comprise, as an element, a main beam, which is the main load carrying element and is running in a longitudinal direction of the wind turbine blade. The main beam can be formed by the main spar caps, which are responsible for carrying the main longitudinal load, and the main shear web, which is responsible for carrying the main shear load. Furthermore, the internal structure of the wind turbine blade can comprise, as an element, a trailing-edge beam, which is an element running in a longitudinal direction of the wind turbine blade and is placed in between the main beam and a trailing edge of the wind turbine blade. The trailing-edge beam is used basically for shell stability at the zones where shell panels are big, although it is also carrying a small but relevant percentage of the longitudinal and shear loads of the wind turbine blade. The trailing-edge beam can be formed by secondary spar caps and a secondary shear web. The documents EP 2 518 311 A1, EP 2 377 674 A1,
US 2011 / 031 758 A1 and CN 105 402 084 A disclose different wind turbine blades and methods for manufacturing wind turbine blades.

Disadvantageously, the trailing-edge beam is a non-efficient element in terms of added mass (or cost) versus structural performance. Often, it is placed at a zone with reduced profile thickness, so it cannot be efficient in providing flapwise bending stiffness. Furthermore, often, it is placed distanced to the very trailing-edge position, but closer to the main beam, so it will not be efficient in providing edgewise bending stiffness either.

It is the object of the present invention to at least partially solve the above-described disadvantages. In particular, it is the object of the present invention to provide a simple and/or inexpensive method of manufacturing a wind turbine blade.

The above object is achieved by a method of manufacturing having the features of claim 1. Further features and details of the invention result from the sub-claims, the description and the drawings.

The present invention discloses a method of manufacturing a wind turbine blade for a wind turbine, wherein at least a blade shell of the wind turbine blade is integrally manufactured, and wherein the wind turbine blade extending in a longitudinal direction from a root region comprising a root attachment interface for attaching the wind turbine blade to a rotor of the wind turbine, through a middle region comprising a maximum chordal width of the wind turbine blade, into a tip region comprising a wind turbine blade tip. Furthermore, the wind turbine blade comprises a blade shell, wherein the blade shell is surrounding an inner space of the wind turbine blade. Furthermore, the wind turbine blade comprises a main beam, in particular a single main beam, running in the longitudinal direction of the wind turbine blade with two opposite arranged spar caps and a web connecting the two spar caps. Furthermore, the wind turbine blade comprises at least a stability component, wherein the stability component is configured according to the invention. Furthermore, the stability component is arranged by means of a component interface of the stability component in the inner space of the wind turbine blade angled to the longitudinal direction of the wind turbine blade for stabilizing the blade shell of the wind turbine blade of the wind turbine, wherein the component interface of the stability component is built respectively formed at least partially on an edge section of the stability component and wherein especially the stability component is at least partially arranged on the main beam and/or the blade shell. Furthermore, the stability component extends from the main beam in a direction towards a trailing edge of the wind turbine blade in the inner space of the wind turbine blade, especially from the main beam to a trailing edge of the wind turbine blade in the inner space of the wind turbine blade or close to it. It is conceivable that the stability component is not reaching the trailing edge, especially a trailing edge vertical wall. In other words, the stability component can end slightly before the trailing edge, especially slightly before a trailing edge vertical wall. The method comprises as a step that at least a stability component is provided, wherein the stability component is configured to be arranged in an inner space of a wind turbine blade angled to a longitudinal direction of the wind turbine blade by means of a component interface of the stability component for stabilizing a blade shell of the wind turbine blade of a wind turbine. Furthermore, the component interface of the stability component is built respectively formed at least partially on an edge section of the stability component. Furthermore, the stability component is multi-part with at least a first sub-body and a second sub-body, wherein the first sub-body and/or the second sub-body is respectively are formed plate-like, and wherein at least the first sub-body is arrangeable or arranged with an arrangement section on a counter arrangement section of the second sub-body to increase the stability of the stability component. Furthermore, the method comprises as a step that (provided) components to integrally form the blade shell of the wind turbine blade are arranged, wherein the arranged components are forming an inner space. Furthermore, the method comprises as a step that at least the first sub-body of the stability component is arranged in the inner space formed by the arranged components. Furthermore, the method comprises as a step that the first sub-body of the stability component is joined to the components. Furthermore, the method comprises as a step that at least the components to form the integrally manufactured blade shell are joined, in particular are non-detachably joined. Furthermore, the method comprises as a step that the second sub-body with the counter arrangement section is arranged to the arrangement section of the first sub-body to increase a stability of the stability component, wherein especially the second sub-body is arranged to the first sub-body temporally after joining, in particular non-detachably joining, the components to form the integrally manufactured blade shell.

In particular, the provided components to integrally form the blade shell of the wind turbine blade can be core-bodies, e.g. balsa wood, and/or cover-bodies, e.g. fiber layers respectively fiber plies, and/or resin and/or adhesive and so on.

A preferred sequence of steps provides that in a first step, components to integrally form the blade shell of the wind turbine blade are provided and that at least one stability component or several stability components are provided, wherein for manufacturing the integrally blade shell the stability component(s) is (are) configured according to the first aspect of the invention. In a second step, the provided components for integrally forming the blade shell are arranged in such a way that an inner space, e.g. by help of mandrels, is formed. Afterwards, at least the first sub-body of the at least one stability component is arranged in the inner space at a designated position. In a following step, the first sub-body of the at least one stability component is joined, **e.g.** by material bonded arrangement and/or a force-locking arrangement and/or a form-fitting arrangement, with the provided components, which are forming the integrally manufactured blade shell, and/or the components to form the integrally manufactured blade shell are joined together, e.g. by a vacuum infusion process with the help of a resin. After curing of the resin, e.g. an epoxy resin, mandrels arranged in the inner space of the blade shell can be removed particularly easy, for example via a frame opening formed by the first sub-body of the at least one stability component, at an ending (root and/or tip) of the integrally manufactured blade shell. In a following step, the second sub-body is arranged, especially non-detachably arranged, with the counter arrangement section to the arrangement section of the first sub-body to increase a stability of the stability component.

The process steps described to this method before and in the following can be carried out, if technically reasonable, individually, together, singly, multiply, temporally parallel and/or successively in any order.

In particular, the edge section of the stability component is a section of the stability component at the edge, especially at an outer edge, of the stability component and/or at the edge, especially an outer edge, of the first sub-body and/or the edge, especially an outer edge, of the second sub-body. The edge section can also be understood as an outer edge section. Preferably, the component interface of the stability component is built respectively formed circumferentially on the edge section, especially on an outer edges section, of the stability component respectively the first sub-body respectively the second sub-body. Thus, the blade shell can be stabilized in a particularly advantageous way.

In particular, it is conceivable that the stability component and/or the first sub-body and/or the second sub-body is arranged, preferably directly arranged, to the blade shell or to a blade shell laminate of the blade shell or to a sandwich shell laminate of the blade shell of the wind turbine blade by means of the component interface of the stability component. In particular, it is conceivable that the first sub-body and/or the second sub-body of the stability component is respectively are integrally formed with the blade shell of the wind turbine blade. Thus, the stability component can be particularly stable.

In particular, the arrangement of the stability component and/or the first sub-body and/or the second sub-body to the blade shell is a materially bonded arrangement, **e.g.** with the help of a resin and/or an adhesive. Thus, the arrangement of the stability component can be done in a simple manner. Furthermore, the wind turbine blade can be particularly lightweight.

In particular, it is conceivable that at least the first sub-body and the second sub-body are comprising, preferably are made out of, the same material(s) and/or that at least the first sub-body and the second sub-body are comprising the same (material) structure. Thus, the stability component can be fabricated in a simple and/or cost-effective manner.

In particular, the first sub-body is following (at least partially or completely) the (inner) blade shell shape of the blade shell of the wind turbine blade for stabilizing the blade shell and/or the second sub-body is following (at least partially or completely) the (inner) blade shell shape of the blade shell of the wind turbine blade for stabilizing the blade shell.

In particular, the root region of the wind turbine blade is a region starting from the root attachment interface for attaching the wind turbine blade to the rotor of the wind turbine and ending at a beginning of the middle region of the wind turbine blade.

In particular, the tip region of the wind turbine blade is a region starting from an ending of the middle region of the wind turbine blade and ending at the wind turbine blade tip.

It is conceivable that the blade shell is produced as a laminate, especially a sandwich laminate, wherein especially the laminated blade shell comprises at least a plate-shaped core-body having a first plate side and a second plate side opposite the first plate side, and/or a first cover-body for absorbing forces, wherein the first cover-body is arranged on the first plate side of the core-body, and/or a second cover-body for absorbing forces, wherein the second cover-body is arranged on the second plate side of the core-body. In particular, the thickness of the core-body is greater than the thickness of the first cover-body and/or the thickness of the core-body is greater than the thickness of the second cover-body. For example, the core-body comprises foam and/or wood, e.g. balsa wood, and/or the first cover-body comprises fibers, e.g. glass fibers respectively glass plies and/or carbon fibers respectively carbon plies, and/or the second cover-body comprises fibers, e.g. glass fibers respectively glass plies and/or carbon fibers respectively carbon plies.

In particular, it is conceivable that the stability component is arranged, preferably directly arranged, to the blade shell or to a blade shell laminate of the blade shell or to a sandwich shell laminate of the blade shell of the wind turbine blade by means of the component interface of the stability component.

It may be advantageous if at least several or a plurality of stability components are arranged by means of a respective component interface in the middle region in the inner space of the wind turbine blade each angled to the longitudinal direction of the wind turbine blade so that the blade shell of the wind turbine blade of the wind turbine is stabilized, wherein the several or the plurality of stability components are arranged spaced apart from each other in the longitudinal direction of the wind turbine blade. Thus, the blade shell of the wind turbine blade can be particularly stabilized in the longitudinal direction of the wind turbine blade. In particular, each of the several or plurality of the stability components is configured according to the invention, especially according to a first and/or second aspect of the invention. Preferably, each of the several or the plurality of stability components is shaped in such a way that it follows the inner blade shell shape of the blade shell of the wind turbine blade and/or that it follows the main beam shape of the main beam of the wind turbine blade so that each of the stability components is extending from the main beam to a trailing edge of the wind turbine. Thus, the blade shell of the wind turbine blade can be particularly stabilized at least in the middle region of the wind turbine blade.

According to the method, the blade shell can be stabilized in a simple and/or inexpensive manner. Furthermore, a buckling performance of the wind turbine blade can be particularly advantageous, especially improved with regard to a wind turbine blade comprising a trailing-edge beam. Furthermore, an adhesive joint at the trailing edge of the wind turbine blade can be particularly stable so that also the wind turbine blade can be particularly stable. Thus, advantageously, a trailing-edge beam can be dispensed with and a mass of the wind turbine blade can be particularly small, especially reduced with regard to a wind turbine blade comprising a trailing-edge beam.

It may be advantageous if the first sub-body of the stability component is frame-shaped to form a circumferential stabilizing frame, wherein the circumferential stabilizing frame is surrounding a frame opening. The frame-shaped first sub-body of the stability component can form a triangle-like stabilizing frame, wherein the triangle-like stabilizing frame is surrounding the frame opening, preferably a triangle-like frame opening. The stabilizing frame, especially the triangle-like stabilizing frame, enables that on the one hand, the blade shell of the wind turbine blade can be particularly advantageous circumferentially stabilized from a main beam of the wind turbine blade to a trailing edge of the wind turbine blade. On the other hand, the frame opening allows enough space for placing at least one mandrel or multiple mandrels in an inner space of arranged components for integrally manufacturing a blade shell of the wind turbine blade, wherein after casting, the mandrels can be removed and the frame opening can be at least partially closed by the second sub-body to increase the stability of the stability component. In particular, a frame thickness of the frame-shaped first sub-body along the first sub-body is equal or substantially equal. Thus, the stability of the stability component can be particularly advantageous. In particular, the second sub-body fills respectively covers the whole frame opening of the circumferential stabilizing frame, wherein especially the second sub-body is overlapping an inner edge of the first sub-body. Thus, the stability component is particularly stable.

It may be advantageous if the second sub-body can be arranged or is arranged with the counter arrangement section on the arrangement section of the first sub-body in such a way that the frame opening is at least partially covered respectively closed by the second sub-body in order to increase a stability of the stability component. Thus, the stability component can stabilize the blade shell of the wind turbine blade particularly advantageous. Preferably, the second sub-body is plate-like, especially a plate-like sandwich-body. Thus, the second sub-body can be manufactured particularly easily and/or inexpensively and/or lightweight. As already mentioned, preferably the second sub-body closes respectively covers the whole frame opening of the circumferential stabilizing frame, wherein especially the second sub-body is overlapping an inner edge of the first sub-body. Thus, the stability component is particularly stable, and the blade shell of the wind turbine blade is stabilized in particularly advantageous way.

It may be advantageous if the stability component comprises a stabilizing frame, in particular a circumferential stabilizing frame, wherein the first sub-body is forming together with the second sub-body at least a part of the stabilizing frame, wherein the stabilizing frame is surrounding a frame opening. In other words, the stabilizing frame can be a multi-part stabilizing frame comprising several or multiple frame parts, wherein the several or multiple frame parts (at least the first sub-body and the second sub-body) are forming the stabilizing frame. Thus, the stability component comprises several or multiple frame parts (at least the first sub-body and the second sub-body) for forming the stabilizing frame, e.g. a triangle-like stabilizing frame, with a frame opening, wherein especially the stability component can comprise at least a third sub-body to close respectively to cover the frame opening, preferably to close respectively to cover the whole frame opening, of the stabilizing frame, especially circumferential stabilizing frame. It is also conceivable that the stabilizing frame is a non-continuous stabilizing frame, wherein especially at least some frame parts a spaced apart. Due to the multi-part design, the stability component can be arranged particularly easily in an inner space.

It may be advantageous if the first sub-body with the arrangement section is arranged detachably, in particular non-destructively detachably, on the counter arrangement section of the second sub-body. Thus, inner access to the wind turbine blade, in case it is needed, can be guaranteed. The detachable, in particular the non-destructively detachable, arrangement can be a force-locking and/or a formfit arrangement respectively connection, e.g. a bolt connection. Alternatively, it is also conceivable that the first sub-body with the arrangement section is arranged non-detachably on the counter arrangement section of the second sub-body, e.g. by an adhesive. Thus, the stability component can be particularly simple in design.

It may be advantageous if the first sub-body comprises a plate-shaped core-body having a first plate side and a second plate side opposite the first plate side, and/or a first cover-body for absorbing forces to stabilize the blade shell of the wind turbine blade, wherein the first cover-body is arranged on the first plate side of the core-body, and/or a second cover-body for absorbing forces to stabilize the blade shell of the wind turbine blade, wherein the second cover-body is arranged on the second plate side of the core-body. Alternatively or additionally, it may be advantageous if the second sub-body comprises a plate-shaped core-body having a first plate side and a second plate side opposite the first plate side, and/or a first cover-body for absorbing forces to stabilize the blade shell of the wind turbine blade, wherein the first cover-body is arranged on the first plate side of the core-body, and/or a second cover-body for absorbing forces to stabilize the blade shell of the wind turbine blade, wherein the second cover-body is arranged on the second plate side of the core-body. Thus, the first sub-body and/or the second sub-body of the stability component can have a particularly easy structure. In particular, at least the core-body, the first cover-body and the second cover-body can form a sandwich-body, especially a laminated sandwich-body. In other words, the core-body, the first cover-body and the second cover-body can form a sandwich laminate. The following features and/or details and/or advantages and/or statements regarding the core-body and/or the first cover-body and/or the second cover-body may apply to the first sub-body, the second sub-body, further sub-bodies and/or the stability component and/or the first stability component and/or further stability components with a core-body and/or with a first cover-body and/or with a second cover-body itself. In particular, the thickness of the core-body is greater than the thickness of the first cover-body and/or the thickness of the core-body is greater than the thickness of the second cover-body. For example, the core-body comprises foam and/or wood, e.g. balsa wood, and/or the first cover-body comprises fibers, e.g. glass fibers respectively glass plies and/or carbon fibers respectively carbon plies, and/or the second cover-body comprises fibers, e.g. glass fibers respectively glass plies and/or carbon fibers respectively carbon plies. It is conceivable that the fibers of the first cover-body and/or the fibers of the second cover-body are aligned non-unidirectional. Thus, the stability component can carry the loads in a particularly advantageous way and the stability of the stability component can be particularly advantageous. Furthermore, it is conceivable that the first cover-body is layer-like and the second cover-body is layer-like.

Further measures improving the invention result from the following description of some examples of implementation of the invention, which are shown schematically in the figures. All features and/or advantages arising from the claims, the description or the drawings, including constructional details, spatial arrangements and process steps, may be essential to the invention both individually and in the various combinations. It should be noted that the figures are descriptive only and are not intended to limit the invention in any way.

They show schematically:
Fig. 1 a non-claimed wind turbine blade with a stability component,
Fig. 2 a non-claimed wind turbine blade with a stability component,
Fig. 3 a non-claimed wind turbine blade with a stability component,
Fig. 4 a non-claimed wind turbine blade with several stability components,
Fig. 5 a manufacturing method, and
Fig. 6 a manufacturing method.

In the following figures, identical reference signs are used for the same technical features, even from different design examples.

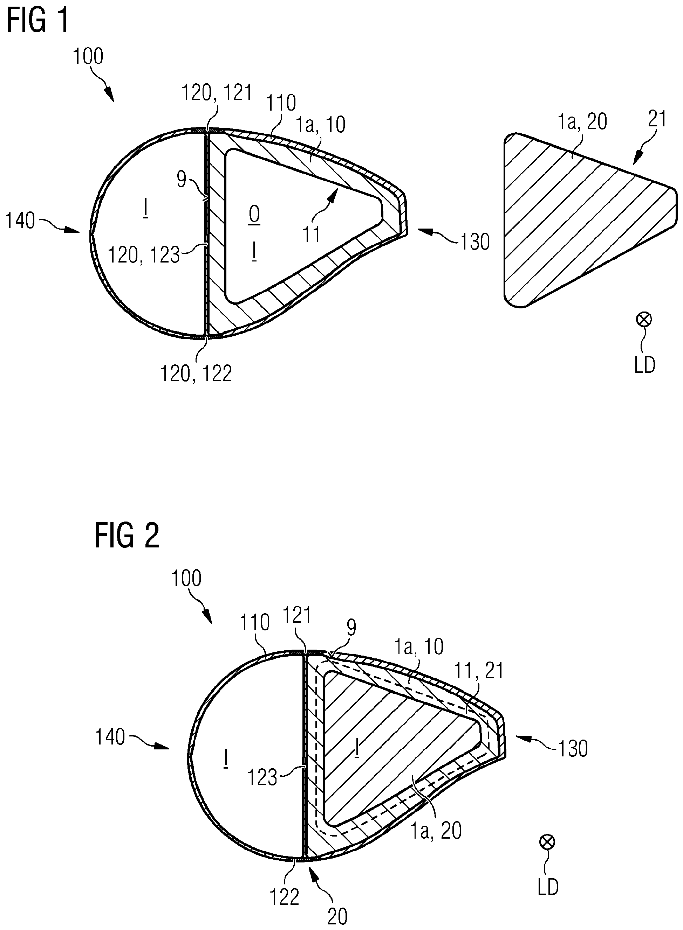

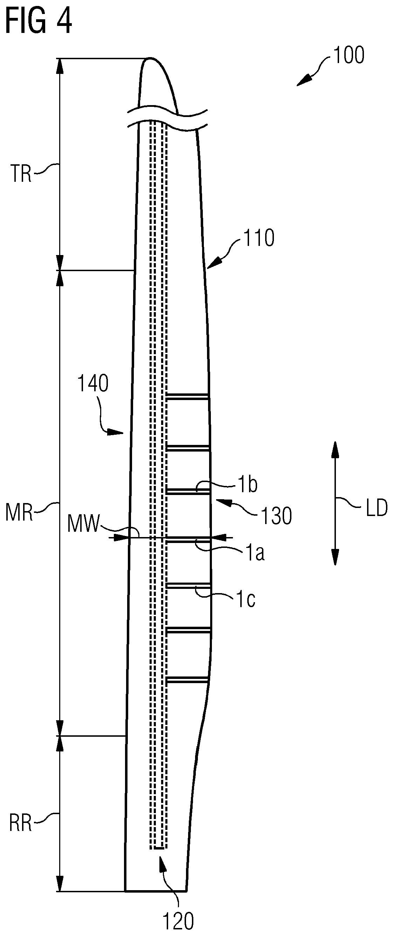

Fig. 1 respectively fig. 2 show in a cross-section view a wind turbine blade 100 for a wind turbine, wherein the wind turbine blade 100 is extending in a longitudinal direction LD from a root region RR comprising a root attachment interface for attaching the wind turbine blade 100 to a rotor of the wind turbine, through a middle region MR comprising a maximum chordal width MW of the wind turbine blade 100, into a tip region TR comprising a wind turbine blade tip (see e.g. fig. 4). The wind turbine blade 100 comprises a blade shell 110, the blade shell 110 surrounding an inner space I of the wind turbine blade 100. Furthermore, the wind turbine blade 100 comprises a main beam 120, in particular a single main beam, running in the longitudinal direction LD of the wind turbine blade 100 (see e.g. fig. 4) with two opposite arranged spar caps 121, 122 and a web 123 connecting the two spar caps 121, 122. Furthermore, the wind turbine blade 100 comprises at least a stability component 1a wherein the stability component 1a is configured according to a first aspect of the invention. The first sub-body 10 of the stability component 1a and/or the second sub-body 20 of the stability component 1a is formed plate-like, and wherein at least the first sub-body 10 is arrangeable (see fig. 1) or arranged (see fig. 2) with an arrangement section 11 on a counter arrangement section 21 of the second sub-body 20 to increase the stability of the stability component 1a. The first sub-body 10 of the stability component 1a is arranged by means of a component interface 9 of the stability component 1a in the inner space I of the wind turbine blade 100 angled to the longitudinal direction LD of the wind turbine blade 100 for stabilizing the blade shell 110 of the wind turbine blade 100 of the wind turbine (see **e.g.** fig. 4). It is conceivable that the first sub-body 10 of the stability component is integrally formed with the blade shell 110 of the wind turbine blade 100. The component interface 9 of the first sub-body 10 of the stability component 1a is built circumferentially at an edge section of the first sub-body 10 of the stability component 1a. Furthermore, the first sub-body of the stability component 1a is arranged on the main beam 120 and the blade shell 110, and wherein the first sub-body 10 extends respectively the first sub-body 10 together with the second sub-body 20 (see fig. 2) are extending from the main beam 120 to a trailing edge 130 of the wind turbine blade 100 in the inner space I of the wind turbine blade 100. Advantageously, with such a stability component 1a, a trailing-edge beam can be dispensed with.

It is further conceivable for the wind turbine blade 100 according to fig. 1 respectively fig. 2 that the first sub-body 10 of the stability component 1a is frame-shaped to form a circumferential stabilizing frame, wherein the circumferential stabilizing frame is surrounding a frame opening O. Alternatively, it is conceivable (not shown) that the stability component 1a comprises a stabilizing frame, in particular a circumferential stabilizing frame, wherein the first sub-body 10 is forming together with the second sub-body 20 at least a part of the stabilizing frame, wherein the stabilizing frame is surrounding a frame opening O.

It is further conceivable for the wind turbine blade 100 according to fig. 1 respectively fig. 2 that the second sub-body 20 can be arranged or is arranged with the counter arrangement section 21 on the arrangement section 11 of the first sub-body 10 in such a way that the frame opening O is at least partially covered by the second sub-body 20 in order to increase a stability of the stability component 1a (see fig. 2).

It is further conceivable for the wind turbine blade 100 according to fig. 1 respectively fig. 2 that the first sub-body 10 and/or the second sub-body 20 comprise a plate-shaped core-body having a first plate side and a second plate side opposite the first plate side, and that the first sub-body 10 and/or the second sub-body 20 comprise a first cover-body for absorbing forces to stabilize the blade shell 110 of the wind turbine blade 100, wherein the first cover-body is arranged on the first plate side of the core-body, and that the first sub-body 10 and/or the second sub-body 20 comprise a second cover-body for absorbing forces to stabilize the blade shell 110 of the wind turbine blade 100, wherein the second cover-body is arranged on the second plate side of the core-body. In other words, the first sub-body 10 and/or the second sub-body 20 can be a sandwich-body.

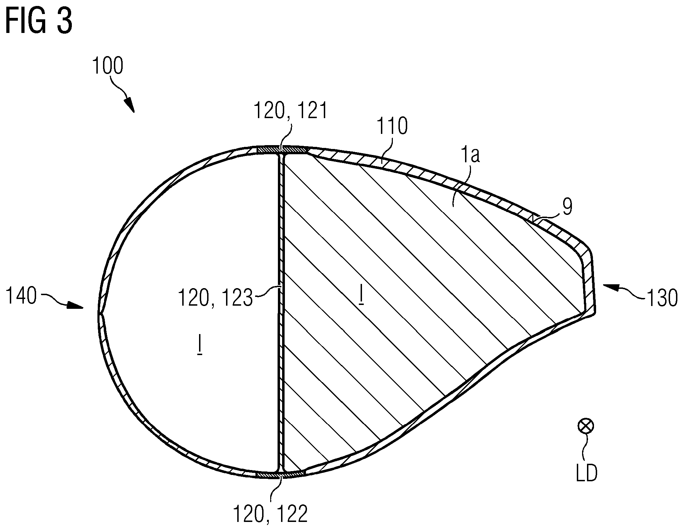

Fig. 3 shows in a cross-section view a wind turbine blade 100 as especially already described with regard to fig. 1 respectively fig. 2, wherein the stability component 1a is a one-piece stability component and not multi-part as shown in fig. 1 or fig. 2. In particular, the stability component 1a is plate-shaped and comprises a core-body having a first plate side and a second plate side opposite the first plate side, wherein a first cover-body, e.g. fiber plies, is arranged on the first plate side of the core-body and a second cover-body, e.g. fiber plies, is arranged on the second plate side of the core-body. In other words, the stability component 1a can form a sandwich-body. Advantageously, with such a stability component 1a, a trailing-edge beam can be dispensed with and at the same time, there is no need to also incorporate a stability component extending from the main beam 120 to a leading edge 140 (that is opposite to the trailing edge 130) of the wind turbine blade 100.

Fig. 4 shows in a top view a wind turbine blade 100 as especially already described with regard to fig. 1 and/or fig. 2 and/or fig. 3. The wind turbine blade 100 comprises multiple stability components 1a, 1b, 1c. Each of the multiple stability components 1a, 1b, 1c is arranged in the inner space I of the wind turbine blade 100 at an angle of 90° or substantially 90° with regard to the longitudinal direction LD of the wind turbine blade 100. Alternatively, it is also conceivable that at least one stability component 1a, 1b, 1c of the multiple stability components 1a, 1b, 1c is arranged in the inner space I of the wind turbine blade 100 at an angle of 45° - 85°, in particular at an angle of 60° - 80°, with regard to the longitudinal direction LD of the wind turbine blade 100. Furthermore, the three or more stability components 1a, 1b, 1c are spaced apart, preferably evenly spaced apart, from each other, wherein especially one stability component 1a is placed at the position of the maximum chordal width MW of the wind turbine blade 100 or close to it.

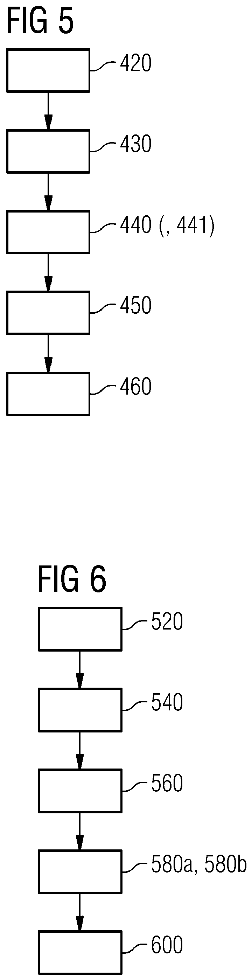

Fig. 5 shows a method of manufacturing a wind turbine blade 100 for a wind turbine, wherein in particular, the wind turbine blade 100 is configured according to the invention, for example, as described with regard to figs. 1 - 4. The method comprises as a step that several or multiple blade shell members of a blade shell 110 of the wind turbine blade 100 are provided 420. Furthermore, the method comprises as a step that at least a stability component 1a is provided 430, wherein the stability component 1a is configured according to the invention. Furthermore, the method comprises as a step that the at least one stability component 1a is arranged 440 or arranged 440 and joined 441 to at least a first blade shell member of the several or the plurality of blade shell members. Furthermore, the method comprises as a step that the remaining blade shell members of the several or the plurality of blade shell members are arranged 450 to the first blade shell member and to the stability component 1a, which is arranged or arranged and joined to the first blade shell member. Furthermore, the method comprises as a step that at least the several or the plurality of blade shell members and the at least one stability component 1a are joined together.

Fig. 6 shows a further method of manufacturing a wind turbine blade 100 for a wind turbine, wherein at least a blade shell 110 of the wind turbine blade 100 is integrally manufactured, wherein in particular the wind turbine blade 100 is configured according to the invention, for example, as described with regard to figs. 1 - 4. The method comprises as a step that at least a stability component 1a is provided 520, wherein the stability component 1a is configured according to the invention, especially according to a first aspect of the invention. Furthermore, the method comprises as a step that components, e.g. balsa wood, fiber plies, molds, etc., to integrally form the blade shell 110 of the wind turbine blade 100, e.g. by a vacuum infusion process, are provided and arranged 540, wherein the arranged components are arranged in such a way, e.g. by the help of mandrels, that they are forming an inner space I. Furthermore, the method comprises as a step that at least the first sub-body 10 of the stability component 1a is arranged in the created inner space I formed by the arranged components. Furthermore, the method comprises as a step that the first sub-body 10, e.g. a frame-shaped first sub-body 10, of the stability component 1a is joined 580a to the (arranged) components (for integrally forming the blade shell 110). Furthermore, the method comprises as a step that at least the components to form the integrally manufactured blade shell 110 are joined 580b, e.g. by a vacuum infusion process. Furthermore, the method comprises as a step that the second sub-body 20 is arranged 600 with the counter arrangement section 21 to the arrangement section 11 of the first sub-body 10 to increase a stability of the stability component 1a, wherein especially the second sub-body 20 is arranged 600 to the first sub-body 10 temporally after joining 580b, in particular non-detachably joining, the components to form the integrally manufactured blade shell 110.

## Claims

1. Method of manufacturing a wind turbine blade (100) for a wind turbine, wherein at least a blade shell (110) of the wind turbine blade (100) is integrally manufactured, wherein the wind turbine blade (100) is extending in a longitudinal direction (LD) from a root region (RR) comprising a root attachment interface for attaching the wind turbine blade (100) to a rotor of the wind turbine, through a middle region (MR) comprising a maximum chordal width (MW) of the wind turbine blade (100), into a tip region (TR) comprising a wind turbine blade tip, and wherein the wind turbine blade (100) comprises:
- a blade shell (110), the blade shell (110) surrounding an inner space (I) of the wind turbine blade (100),
- a main beam (120), in particular a single main beam, running in the longitudinal direction (LD) of the wind turbine blade (100) with two opposite arranged spar caps (121, 122) and a web (123) connecting the two spar caps (121, 122),
- at least a stability component (1a, 1b, 1c), wherein the stability component (1a, 1b, 1c) is arranged by means of a component interface (9) of the stability component (1a, 1b, 1c) in the inner space (I) of the wind turbine blade (100) angled to the longitudinal direction (LD) of the wind turbine blade (100) for stabilizing the blade shell (110) of the wind turbine blade (100) of the wind turbine, wherein the component interface (9) of the stability component (1a, 1b, 1c) is built at least partially on an edge section of the stability component (1a, 1b, 1c) and wherein especially the stability component (1a, 1b, 1c) is at least partially arranged on the main beam (120) and/or the blade shell (110), and wherein the stability component (1a, 1b, 1c) extends from the main beam (120) in a direction towards a trailing edge (130) of the wind turbine blade (100) in the inner space (I) of the wind turbine blade (100), the method comprising:
- Providing (520) at least a stability component (1a, 1b, 1c), wherein the stability component (1a, 1b, 1c) is configured to be arranged in an inner space (I) of a wind turbine blade (100) angled to a longitudinal direction (LD) of the wind turbine blade (100) by means of a component interface (9) of the stability component (1a, 1b, 1c) for stabilizing a blade shell (110) of the wind turbine blade (100) of a wind turbine, wherein the component interface (9) of the stability component (1a, 1b, 1c) is built at least partially on an edge section of the stability component (1a, 1b, 1c), wherein the stability component (1a, 1b, 1c) is multi-part with at least a first sub-body (10) and a second sub-body (20), wherein the first sub-body (10) and/or the second sub-body (20) is formed plate-like, and wherein at least the first sub-body (10) is arrangeable or arranged with an arrangement section (11) on a counter arrangement section (21) of the second sub-body (20) to increase the stability of the stability component (1a, 1b, 1c),
- arranging (540) components to integrally form the blade shell (110) of the wind turbine blade (100), wherein the arranged components are forming an inner space (I),
- arranging (560) at least the first sub-body (10) of the stability component (1a, 1b, 1c) in the inner space (I) formed by the arranged components,
- joining (580a) the first sub-body (10) of the stability component (1a, 1b, 1c) to the components,
- joining (580b), in particular non-detachably joining, at least the components to form the integrally manufactured blade shell (110),
- arranging (600) the second sub-body (20) with the counter arrangement section (21) to the arrangement section (11) of the first sub-body (10) to increase a stability of the stability component (1a, 1b, 1c),
wherein the second sub-body (20) is arranged to the first sub-body (10) temporally after joining (580b), in particular non-detachably joining, the components to form the integrally manufactured blade shell (110).

2. Method according to claim 1,
**characterized in that**
the first sub-body (10) of the stability
component (1a, 1b, 1c) is frame-shaped to form a circumferential stabilizing frame, wherein the circumferential stabilizing frame is surrounding a frame opening (O).

3. Method according to claim 2,
**characterized in that**
the second sub-body (20) can be arranged or is arranged with the counter arrangement section (21) on the arrangement section (11) of the first sub-body (10) in such a way that the frame opening (O) is at least partially covered by the second sub-body (20) in order to increase a stability of the stability component (1a, 1b, 1c).

4. Method according to claim 1,
**characterized in that**
the stability component (1a, 1b, 1c) comprises a stabilizing frame, in particular a circumferential stabilizing frame, wherein the first sub-body (10) is forming together with the second sub-body (20) at least a part of the stabilizing frame, wherein the stabilizing frame is surrounding a frame opening (O).

5. Method according to any of the preceding claims,
**characterized in that**
the first sub-body (10) with the arrangement section (11) is arranged detachably, in particular non-destructively detachably, on the counter arrangement section (21) of the second sub-body (20).

6. Method according to any one of the preceding claims,
**characterized in that**
the first sub-body (10) and/or the second sub-body (20) comprises:
- a plate-shaped core-body having a first plate side and a second plate side opposite the first plate side,
- a first cover-body for absorbing forces to stabilize the blade shell (110) of the wind turbine blade (100), wherein the first cover-body is arranged on the first plate side of the core-body,
- a second cover-body for absorbing forces to stabilize the blade shell (110) of the wind turbine blade (100), wherein the second cover-body is arranged on the second plate side of the core-body.

7. Method according to any of the previous claims,
**characterized in that**
at least several or a plurality of stability
components (1a, 1b, 1c) are arranged by means of a respective component interface (9)in the middle region (MR) in the inner space (I) of the wind turbine blade (100) each angled to the longitudinal direction (LD) of the wind turbine blade (100) for stabilizing the blade shell (110) of the wind turbine blade (100) of the wind turbine, wherein the several or the plurality of stability components (1a, 1b, 1c) are arranged spaced apart from each other in the longitudinal direction (LD) of the wind turbine blade (100).

## Patentansprüche

1. Verfahren zum Herstellen eines Windenergieanlagenblatts (100) für eine Windenergieanlage, wobei mindestens eine Blattschale (110) des Windenergieanlagenblatts (100) integral hergestellt ist, wobei sich das Windenergieanlagenblatt (100) in einer Längsrichtung (LD) von einem Wurzelbereich (RR), der eine Wurzelbefestigungsschnittstelle zum Anbringen des Windenergieanlagenblatts (100) an einem Rotor der Windenergieanlage umfasst, durch einen mittleren Bereich (MR), der eine maximale Sehnenbreite (MW) des Windenergieanlagenblatts (100) umfasst, in einen Spitzenbereich (TR), der eine Windenergieanlagenblattspitze umfasst, erstreckt, und wobei das Windenergieanlagenblatt (100) Folgendes umfasst:
- eine Blattschale (110), wobei die Blattschale (110) einen Innenraum (I) des Windenergieanlagenblatts (100) umgibt,
- einen in der Längsrichtung (LD) des Windenergieanlagenblatts (100) verlaufenden Hauptträger (120), insbesondere einen einzelnen Hauptträger, mit zwei gegenüberliegend angeordneten Holmgurten (121, 122) und einem die beiden Holmgurte (121, 122) verbindenden Steg (123),
- mindestens eine Stabilitätskomponente (1a, 1b, 1c), wobei die Stabilitätskomponente (1a, 1b, 1c) mittels einer Komponentenschnittstelle (9) der Stabilitätskomponente (1a, 1b, 1c) in dem Innenraum (I) des Windenergieanlagenblatts (100) angeordnet und zu der Längsrichtung (LD) des Windenergieanlagenblatts (100) zur Stabilisierung der Blattschale (110) des Windenergieanlagenblatts (100) abgewinkelt ist, wobei die Komponentenschnittstelle (9) der Stabilitätskomponente (1a, 1b, 1c) mindestens teilweise auf einem Kantenabschnitt der Stabilitätskomponente (1a, 1b, 1c) gebaut ist und wobei insbesondere die Stabilitätskomponente (1a, 1b, 1c) mindestens teilweise auf dem Hauptträger (120) und/oder der Blattschale (110) angeordnet ist, und wobei sich die Stabilitätskomponente (1a, 1b, 1c) von dem Hauptträger (120) in einer Richtung zu einer Hinterkante (130) des Windenergieanlagenblatts (100) in dem Innenraum (I) des Windenergieanlagenblatts (100) erstreckt, wobei das Verfahren Folgendes umfasst:
- Bereitstellen (520) mindestens einer Stabilitätskomponente (1a, 1b, 1c), wobei die Stabilitätskomponente (1a, 1b, 1c) dazu ausgestaltet ist, zum Stabilisieren einer Blattschale (110) des Windenergieanlagenblatts (100) einer Windenergieanlage mittels einer Komponentenschnittstelle (9) der Stabilitätskomponente (1a, 1b, 1c,) in einem Innenraum (I) eines Windenergieanlagenblatts (100) und zu einer Längsrichtung (LD) des Windenergieanlagenblatts (100) abgewinkelt angeordnet zu werden, wobei die Komponentenschnittstelle (9) der Stabilitätskomponente (1a, 1b, 1c) mindestens teilweise auf einem Kantenabschnitt der Stabilitätskomponente (1a, 1b, 1c) gebaut ist, wobei die Stabilitätskomponente (1a, 1b, 1c) mehrteilig ist, und zwar mit mindestens einem ersten Teilkörper (10) und einem zweiten Teilkörper (20), wobei der erste Teilkörper (10) und/oder der zweite Teilkörper (20) plattenartig ausgebildet sind und wobei mindestens der erste Teilkörper (10) mit einem Anordnungsabschnitt (11) an einem Gegenanordnungsabschnitt (21) des zweiten Teilkörpers (20) angeordnet werden kann oder angeordnet ist, um die Stabilität der Stabilitätskomponente (1a, 1b, 1c) zu erhöhen,
- Anordnen (540) von Komponenten, so dass sie integral die Blattschale (110) des Windenergieanlagenblatts (100) bilden, wobei die angeordneten Komponenten einen Innenraum (I) bilden,
- Anordnen (560) mindestens des ersten Teilkörpers (10) der Stabilitätskomponente (1a, 1b, 1c) in dem durch die angeordneten Komponenten gebildeten Innenraum (I),
- Verbinden (580a) des ersten Teilkörpers (10) der Stabilitätskomponente (1a, 1b, 1c) mit den Komponenten,
- Verbinden (580b), insbesondere nicht lösbares Verbinden, mindestens der Komponenten, um die integral hergestellte Blattschale (110) zu bilden,
- Anordnen (600) des zweiten Teilkörpers (20) mit dem Gegenanordnungsabschnitt (21) an dem Anordnungsabschnitt (11) des ersten Teilkörpers (10), um eine Stabilität der Stabilitätskomponente (1a, 1b, 1c) zu erhöhen,
wobei der zweite Teilkörper (20) nach dem Verbinden (580b), insbesondere nicht lösbaren Verbinden, der Komponenten vorübergehend an dem ersten Teilkörper (10) angeordnet wird, um die integral hergestellte Blattschale (110) zu bilden.

2. Verfahren nach Anspruch 1,
**dadurch gekennzeichnet, dass**
der erste Teilkörper (10) der Stabilitätskomponente (1a, 1b, 1c) rahmenförmig ist, um einen umlaufenden Stabilisierungsrahmen zu bilden, wobei der umlaufende Stabilisierungsrahmen eine Rahmenöffnung (O) umgibt.

3. Verfahren nach Anspruch 2,
**dadurch gekennzeichnet, dass**
der zweite Teilkörper (20) mit dem Gegenanordnungsabschnitt (21) derart an dem Anordnungsabschnitt (11) des ersten Teilkörpers (10) angeordnet werden kann oder angeordnet ist, dass die Rahmenöffnung (O) mindestens teilweise von dem zweiten Teilkörper (20) abgedeckt ist, um eine Stabilität der Stabilitätskomponente (1a, 1b, 1c) zu erhöhen.

4. Verfahren nach Anspruch 1,
**dadurch gekennzeichnet, dass**
die Stabilitätskomponente (1a, 1b, 1c) einen Stabilisierungsrahmen, insbesondere einen umlaufenden Stabilisierungsrahmen, umfasst,
wobei der erste Teilkörper (10) zusammen mit dem zweiten Teilkörper (20) mindestens einen Teil des Stabilisierungsrahmens bildet, wobei der Stabilisierungsrahmen eine Rahmenöffnung (O) umgibt.

5. Verfahren nach einem der vorhergehenden Ansprüche,
**dadurch gekennzeichnet, dass**
der erste Teilkörper (10) mit dem Anordnungsabschnitt (11) lösbar, insbesondere zerstörungsfrei lösbar, an dem Gegenanordnungsabschnitt (21) des zweiten Teilkörpers (20) angeordnet ist.

6. Verfahren nach einem der vorhergehenden Ansprüche,
**dadurch gekennzeichnet, dass**
der erste Teilkörper (10) und/oder der zweite Teilkörper (20) Folgendes umfassen:
- einen plattenförmigen Kernkörper mit einer ersten Plattenseite und einer der ersten Plattenseite gegenüberliegenden zweiten Plattenseite,
- einen ersten Abdeckkörper zum Absorbieren von Kräften zum Stabilisieren der Blattschale (110) des Windenergieanlagenblatts (100), wobei der erste Abdeckkörper an der ersten Plattenseite des Kernkörpers angeordnet ist,
- einen zweiten Abdeckkörper zum Absorbieren von Kräften zum Stabilisieren der Blattschale (110) des Windenergieanlagenblatts (100), wobei der zweite Abdeckkörper an der zweiten Plattenseite des Kernkörpers angeordnet ist.

7. Verfahren nach einem der vorhergehenden Ansprüche,
**dadurch gekennzeichnet, dass**
mindestens mehrere oder eine Vielzahl von Stabilitätskomponenten (1a, 1b, 1c) mittels einer jeweiligen Komponentenschnittstelle (9) in mittleren Bereich (MR) in dem Innenraum (I) des Windenergieanlagenblatts (100) jeweils abgewinkelt zu der Längsrichtung (LD) des Windenergieanlagenblatts (100) zur Stabilisierung der Blattschale (110) des Windenergieanlagenblatts (100) der Windenergieanlage angeordnet sind, wobei die mehreren oder die Vielzahl von Stabilitätskomponenten (1a, 1b, 1c) in der Längsrichtung (LD) des Windenergieanlagenblatts (100) voneinander beabstandet angeordnet sind.

## Revendications

1. Procédé de fabrication d'une pale d'éolienne (100) pour une éolienne, dans lequel au moins une coque de pale (110) de la pale d'éolienne (100) est fabriquée de manière intégrale, dans lequel la pale d'éolienne (100) s'étend dans une direction longitudinale (LD) depuis une région d'emplanture (RR) comprenant une interface de fixation d'emplanture pour fixer la pale d'éolienne (100) à un rotor de l'éolienne, à travers une région médiane (MR) comprenant une largeur maximale de corde (MW) de la pale d'éolienne (100), dans une région de pointe (TR) comprenant une pointe de pale d'éolienne, et dans lequel la pale d'éolienne (100) comprend :
- une coque de pale (110), la coque de pale (110) entourant un espace interne (I) de la pale d'éolienne (100),
- une poutre principale (120), en particulier une poutre principale unique, se développant dans la direction longitudinale (LD) de la pale d'éolienne (100) avec deux capuchons de longeron (121, 122) agencés de manière opposée et un voile (123) raccordant les deux capuchons de longeron (121, 122),
- au moins un composant de stabilité (1a, 1b, 1c), dans lequel le composant de stabilité (1a, 1b, 1c) est agencé à l'aide d'une interface de composant (9) du composant de stabilité (1a, 1b, 1c) dans l'espace interne (I) de la pale d'éolienne (100) sous un angle par rapport à la direction longitudinale (LD) de la pale d'éolienne (100) pour stabiliser la coque de pale (110) de la pale d'éolienne (100), de l'éolienne, dans lequel l'interface de composant (9) du composant de stabilité (1a, 1b, 1c) est construite au moins partiellement sur une section de bord du composant de stabilité (1a, 1b, 1c) et dans lequel spécialement le composant de stabilité (1a, 1b, 1c) est au moins partiellement agencé sur la poutre principale (120) et/ou la coque de pale (110), et dans lequel le composant de stabilité (1a, 1b, 1c) s'étend depuis la poutre principale (120) dans une direction vers un bord de fuite (130) de la pale d'éolienne (100) dans l'espace interne (I) de la pale d'éolienne (100),
le procédé comprenant les étapes consistant à :
- fournir (520) au moins un composant de stabilité (1a, 1b, 1c), dans lequel le composant de stabilité (1a, 1b, 1c) est configuré pour être agencé dans un espace interne (I) d'une pale d'éolienne (100) sous un angle par rapport à une direction longitudinale (LD) de la pale d'éolienne (100) à l'aide d'une interface de composant (9) du composant de stabilité (1a, 1b, 1c) pour stabiliser une coque de pale (110) de la pale d'éolienne (100) d'une éolienne, dans lequel l'interface de composant (9) du composant de stabilité (1a, 1b, 1c) est construite au moins partiellement sur une section de bord du composant de stabilité (1a, 1b, 1c), dans lequel le composant de stabilité (1a, 1b, 1c) est constitué de plusieurs parties avec au moins un premier sous-corps (10) et un second sous-corps (20), dans lequel le premier sous-corps (10) et/ou le second sous-corps (20) présente une forme de plaque, et dans lequel au moins le premier sous-corps (10) peut être agencé ou est agencé avec une section d'agencement (11) sur une contre-section d'agencement (21) du second sous-corps (20) pour accroître la stabilité du composant de stabilité (1a, 1b, 1c),
- agencer (540) des composants pour former intégralement la coque de pale (110) de la pale d'éolienne (100), dans lequel les composants agencés forment un espace interne (I),
- agencer (560) au moins le premier sous-corps (10) du composant de stabilité (1a, 1b, 1c) dans l'espace interne (I) formé par les composants agencés,
- joindre (580a) le premier sous-corps (10) du composant de stabilité (1a, 1b, 1c) aux composants,
- joindre (580b), en particulier en joignant de manière non détachable, au moins les composants pour former la coque de pale (110) intégralement fabriquée,
- agencer (600) le second sous-corps (20) avec la contre-section d'agencement (21) à la section d'agencement (11) du premier sous-corps (10) pour accroître une stabilité du composant de stabilité (1a, 1b, 1c),
dans lequel le second sous-corps (20) est agencé au premier sous-corps (10) de manière temporaire après jonction (580b), en particulier jonction de manière non détachable, les composants pour former la coque de pale (110) intégralement fabriquée.

2. Procédé selon la revendication 1,
**caractérisé en ce que** le premier sous-corps (10) du composant de stabilité (1a, 1b, 1c) a la forme d'un cadre pour former un cadre de stabilisation circonférentiel, dans lequel le cadre de stabilisation circonférentiel entoure une ouverture de cadre (O).

3. Procédé selon la revendication 2,
**caractérisé en ce que** le second sous-corps (20) peut être agencé ou est agencé avec la contre-section d'agencement (21) sur la section d'agencement (11) du premier sous-corps (10) d'une manière telle que l'ouverture de cadre (O) est au moins partiellement recouverte par le second sous-corps (20) afin d'accroître une stabilité du composant de stabilité (1a, 1b, 1c).

4. Procédé selon la revendication 1,
**caractérisé en ce que** le composant de stabilité (1a, 1b, 1c) comprend un cadre de stabilisation, en particulier un cadre de stabilisation circonférentiel, dans lequel le premier sous-corps (10) forme conjointement au second sous-corps (20) au moins une partie du cadre de stabilisation, dans lequel le cadre de stabilisation entoure une ouverture de cadre (O).

5. Procédé selon l'une quelconque des revendications précédentes,
**caractérisé en ce que** le premier sous-corps (10) avec la section d'agencement (11) est agencé de manière à pouvoir être détaché, en particulier de manière à pouvoir être détaché de manière non destructive, sur la contre-section d'agencement (21) du second sous-corps (20).

6. Procédé selon l'une quelconque des revendications précédentes,
**caractérisé en ce que** le premier sous-corps (10) et/ou le second sous-corps (20) comprend :
- un corps-cœur en forme de plaque ayant un premier côté plaque et un second côté plaque opposé au premier côté plaque,
- un premier corps-couvercle pour absorber des forces pour stabiliser la coque de pale (110) de la pale d'éolienne (100), dans lequel le premier corps-couvercle est agencé sur le premier côté plaque du corps-cœur,
- un second corps-couvercle pour absorber des forces pour stabiliser la coque de pale (110) de la pale d'éolienne (100), dans lequel le second corps-couvercle est agencé sur le second côté plaque du corps-cœur.

7. Procédé selon l'une quelconque des revendications précédentes,
**caractérisé en ce qu'**au moins plusieurs ou une pluralité de composants de stabilité (1a, 1b, 1c) sont agencés à l'aide d'une interface de composant (9) respective dans la région médiane (MR) dans l'espace interne (I) de la pale d'éolienne (100) chacun sous un angle par rapport à la direction longitudinale (LD) de la pale d'éolienne (100) pour stabiliser la coque de pale (110) de la pale d'éolienne (100) de l'éolienne, dans lequel les plusieurs ou la pluralité des composants de stabilité (1a, 1b, 1c) sont agencés espacés à l'écart l'un de l'autre dans la direction longitudinale (LD) de la pale d'éolienne (100).
